# EUROPEAN PATENT SPECIFICATION

(11) **EP 3 982 811 B1**
(45) Date of publication and mention of the grant of the patent: **06.09.2023**
(21) Application number: 20714567.3
(22) Date of filing: 25.03.2020
(51) Int. Cl.: A47L 15/42, A47L 15/48

(54) **A DISHWASHER COMPRISING A HEAT PUMP**
GESCHIRRSPÜLER MIT EINER WÄRMEPUMPE
LAVE-VAISSELLE COMPRENANT UNE POMPE À CHALEUR

(30) Priority: 14.06.2019 TR 201908884
(43) Date of publication of application: 20.04.2022
(73) Proprietor: Arçelik Anonim Sirketi, 34445 Istanbul (TR)
(72) Inventor: KUTUK, Erkan, 34950 Istanbul (TR); ARAS, Nasir Efe, 34950 Istanbul (TR); APAYDIN, Can, 34950 Istanbul (TR); CALISKAN, Huseyin, 34950 Istanbul (TR); POYRAZ, Onur, 34950 Istanbul (TR)
(86) International application number: PCT/EP2020/058315
(87) International publication number: WO 2020/249278

(56) References cited:
- EP-A1- 3 064 629
- CN-A- 106 580 218
- DE-A1-102017 115 585
- US-B2- 9 468 355

## Description

The present invention relates to a dishwasher comprising a heat pump.

In dishwashers, heat pumps are used for decreasing the energy consumption and improve the drying performance. In heat pump dishwashers, the heat pump is composed of the compressor, the first heat exchanger, the throttle valve and the second heat exchanger. The components of the heat pump are connected via a pipe line and the heat pump operates by means of the cycle fluid in the line. The second heat exchanger is a tube bundle having a hot surface and enables the water to be heated by being positioned in the washing liquid of the dishwasher. The first heat exchanger has a cold surface and is positioned so as to contact the ambient air. The first heat exchanger draws heat from the environment and transfers the heat to the compressor and the second heat exchanger. In said heat pump systems, for heating the water, the compressor is operated to enable the second heat exchanger to heat the water, and the first heat exchanger is enabled to absorb heat from the environment to support the second heat exchanger which heats the water. In the heat pump systems, a fan is used for sucking the ambient air and directing the same to the first heat exchanger. The air directed towards the heat pump by means of the fan transfers its heat to the first heat exchanger and is sent back to the environment with its temperature decreased. The air which has cooled down leaves from the rear side of the dishwasher. Generally, the rear side of the dishwasher is closed. Therefore, it is enough for the passage of the cooled air. Moreover, some of the cold air hitting the rear surface of the dishwasher is reflected and some remains in this region and condenses. However, the reflected cold air decreases the heat transfer capacity of the first heat exchanger, increasing the energy consumption required for heating the washing water.

In the state of the art European Patent No. EP3082554, a heat pump dishwasher is disclosed. In the heat pump dishwasher, when the water is required to be heated, the ambient air is passed through the evaporator while in the drying step the humid air in the washing environment passes through the same. The evaporator performs dehumidification in the drying process.

In the state of the art United States Patent No. US9468355, relates to an automatic dishwasher, in particular configured as a domestic dishwasher, having a wash tub providing a washing compartment, a condensation dryer for supplying a wash tub wall with outside air and a heat pump device for heating washing liquid.

In the state of the art China Patent No. CN106580218, relates to the technical field of washing equipment, in particular, to a heat pump type dishwasher and a control method thereof.

In the state of the art European Patent No. EP3064629, relates to a combined washer-dryer in the field of washing machines, and in particular, to a pulsator-type heat pump combined washer-dryer and a drying method.

The aim of the present invention is the realization of a dishwasher wherein the performance of the heat pump is prevented from decreasing and energy efficiency is provided.

The dishwasher realized in order to attain the aim of the present invention, explicated in the first claim and the respective claims thereof, comprises a body and a washing tub disposed in the body and wherein the washing process is performed with the water taken from the mains line. On the body, a drying duct is provided, which provides the circulation of the humid air in the washing tub by taking the same out of the washing tub after the washing process, thus enabling the washed items to be dried. The heat pump is arranged under the washing tub. The heat pump is composed of a first heat exchanger, a second heat exchanger and a compressor. The first heat exchanger draws the heat of the ambient air and transfers it to the second heat exchanger to heat the water to be used in the washing step. The second heat exchanger transfers the heat received to the washing water. The compressor is in fluid connection to the first heat exchanger and the second heat exchanger, and performs the refrigerant cycle. The ambient air is delivered onto the first heat exchanger by means of a fan.

The dishwasher of the present invention comprises an air duct which is disposed between the washing tub and the body and which is connected to the drying duct, and a guiding member
- which has a fixed end disposed on the first heat exchanger and a free end movable around the fixed end and which has a closed position wherein the free end extends towards the rear wall of the body and the air blown by the fan and passing through the first heat exchanger is prevented from reaching the rear wall of the body so as to be guided to the lower side of the body, and
- an open position wherein the free end extends towards the rear wall of the washing tub when the fixed end is on the first heat exchanger such that the air passing through the first heat exchanger is allowed to be delivered to the drying duct via the air duct.

By means of the closed position of the guiding member, the air passing through the first heat exchanger and cooling down by leaving its heat is prevented from reaching the rear wall or being reflected. Thus, the flow rate of the air passing through the first heat exchanger increases, and as the heat transfer capacity of the first heat exchanger increases, the efficiency of the heat pump also increases. In the closed position, the air passing through the first heat exchanger is guided to the lower side of the body to be discharged. By means of the closed position of the guiding member, the air passing through the first heat exchanger and cooling down by leaving its heat is prevented from reaching the rear wall or being reflected. The air in the drying duct is dehumidified so as to form a cold wall, thus improving the drying performance.

In an embodiment of the present invention, the dishwasher comprises the guiding member which can shift between the closed position and the open position by means of a motor provided thereon. For example, the guiding member shifts from the closed position to the open position with the operation of the motor.

In accordance with the present invention, the dishwasher comprises a control unit which controls the movement of the guiding member between the open position and the closed position. The control unit controls the position of the guiding member according to the need for the use or discharge of the air passing through the first heat exchanger during the washing cycle. For example, while performing the washing step during the washing cycle, the control unit shifts the guiding member to the closed position and the air passing through the first heat exchanger is prevented from reaching the rear wall of the body. When the drying step starts during the washing cycle, the control unit shifts the guiding member to the open position so as to deliver the air to the drying duct via the air duct, thus improving the drying performance.

In accordance with the present invention, the dishwasher comprises the control unit which controls the position of the guiding member according to the humidity rate in the drying duct, which is detected by means of a humidity sensor disposed in the drying duct. The control unit shifts the guiding member to the open position or the closed position depending on the humidity rate detected by the humidity sensor.

In another embodiment which does not form part of the present invention, the dishwasher comprises the guiding member which is produced by a thermoformable material. Depending on the temperature of the air passing through the first heat exchanger, the guiding member changes shape and can shift from the open position to the closed position or from the closed position to the open position.

In another embodiment which does not form part of the present invention, the dishwasher comprises at least one heat source which is positioned after the first heat exchanger in the air flow direction provided by the fan. Thus, the temperature of the air passing through the first heat exchanger can be changed.

In another embodiment which does not form part of the present invention, the dishwasher comprises a temperature sensor which detects the temperature of the air passing through the first heat exchanger and the control unit which controls the operation of the heat source by comparing the temperature value received from the temperature sensor with the predetermined temperature value. Thus, the temperature of the air passing through the first heat exchanger is increased such that air with low temperature is prevented from reaching the rear wall and the efficiency of the heat pump is prevented from decreasing.

In another embodiment of the present invention, the dishwasher comprises the control unit which enables the fan speed to be changed. When the control unit changes the fan speed, the amount of air delivered onto the first heat exchange also changes. In case the fan speed is increased, the amount of air passing through the first heat exchanger increases and overcomes the force acting on the guiding member, thus forcing the change between the closed position and the open position.

By means of the present invention, a dishwasher is realized, wherein the air passing through the first heat exchanger and cooling down is prevented from reaching the rear wall of the body by moving the guiding member.

A dishwasher realized in order to attain the aim of the present invention is illustrated in the attached figures, where:

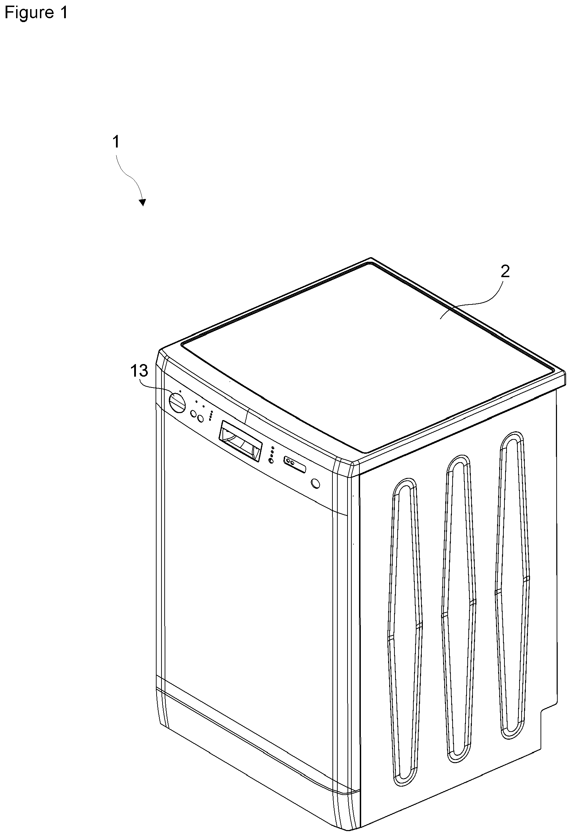

Figure 1 - is the perspective view of the dishwasher comprising a control unit.

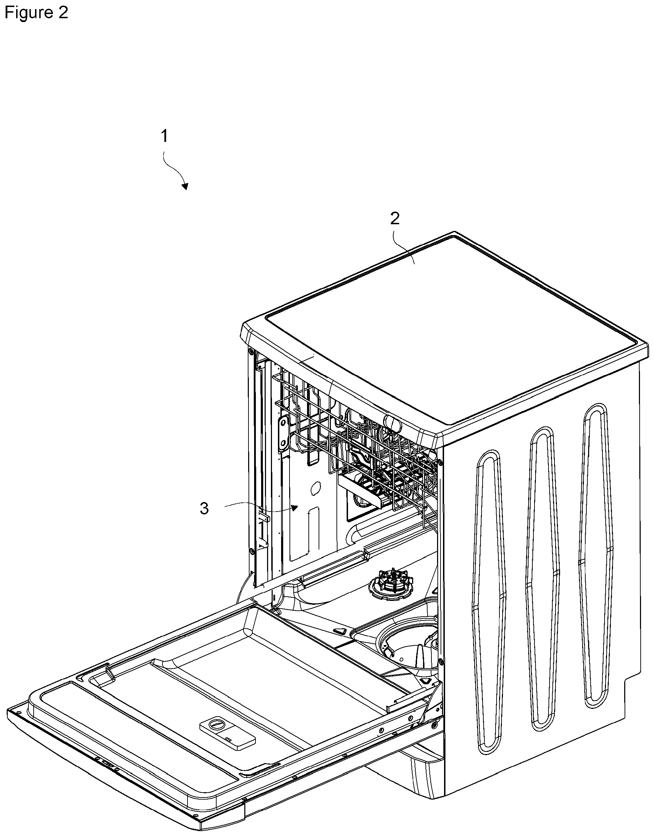

Figure 2 - is the sideways perspective view of the dishwasher.

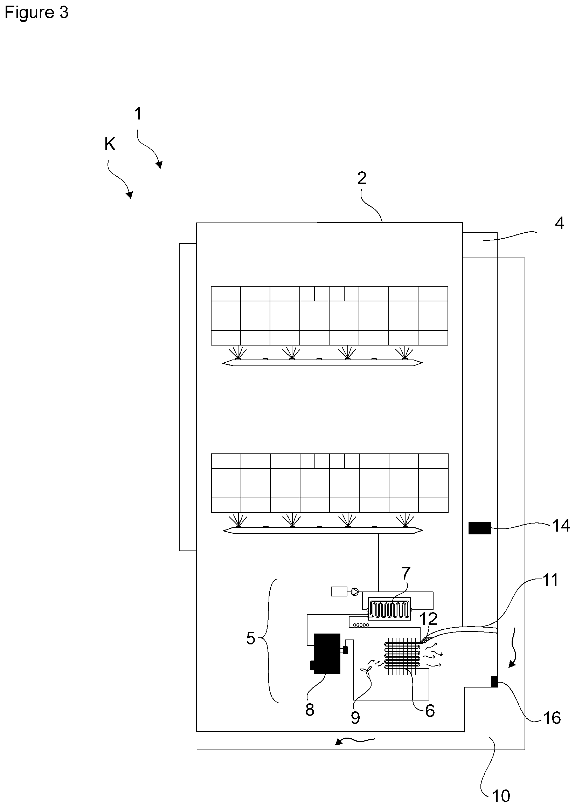

Figure 3 - is the schematic view of the dishwasher when the guiding member is in the closed position in an embodiment of the present invention;

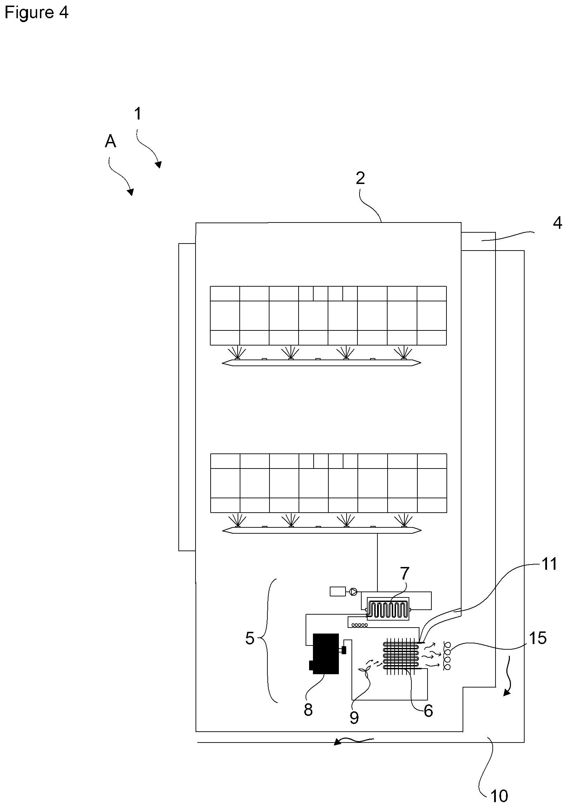

Figure 4 - is the schematic view of the dishwasher when the guiding member is in the open position in an embodiment of the present invention;

The elements illustrated in the figures are numbered as follows:
1- Dishwasher
2- Body
3- Washing tub
4- Drying duct
5- Heat pump
6- First heat exchanger
7- Second heat exchanger
8- Compressor
9- Fan
10- Air duct
11- Guiding member
12- Motor
13- Control unit
14- Humidity sensor
15- Heat source
16- Temperature sensor

A- Open position
B- Closed position

The dishwasher (1) comprises a body (2), and a washing tub (3) which is disposed in the body (2) and wherein the washing process is performed with the water taken from the mains line. In a washing cycle, the drying process is performed after the washing process. On the body (2), a drying duct (4) is provided, which provides the circulation of the humid air in the washing tub (3) by taking the same out of the washing tub (3) after the washing process, thus enabling the washed items to be dried. Under the washing tub (3), a heat pump (5) is disposed, having a first heat exchanger (6) enabling the water to be used in the washing step to be heated by drawing heat from the environment, a second heat exchanger (7) transferring the heat received from the first heat exchanger (6) to the washing water and a compressor (8) fluidly connected to the first heat exchanger (6) and the second heat exchanger (7) so as to realize the refrigerant cycle. The ambient air is delivered onto the first heat exchanger (6) by means of a fan (9).

The dishwasher (1) of the present invention comprises an air duct (10) which is disposed between the washing tub (3) and the body (2) and which is connected to the drying duct (4), and a guiding member (11)
- which has a fixed end disposed on the first heat exchanger (6) and a free end movable around the fixed end and which has a closed position (K) wherein the free end extends towards the rear wall of the body (2) and the air blown by the fan (9) and passing through the first heat exchanger (6) is prevented from reaching the rear wall of the body (2) so as to be guided to the lower side of the body (2), and
- an open position (A) wherein the free end extends towards the rear wall of the washing tub (I3) when the fixed end is on the first heat exchanger (6) such that the air passing through the first heat exchanger (6) is allowed to be delivered to the drying duct (4) via the air duct (10).

The air duct (10) and the drying duct (4) are connected to each other. The air passing through the first heat exchanger (6) is prevented from reaching the rear wall of the body (2) when the guiding member (11) is in the closed position (K). The air in the air duct (10) is enabled to be guided to the lower side of the body (2) so as to be discharged to the outer environment. Thus, the air passing through the first heat exchanger (6) so as to leave its heat and cool down cannot reach the rear wall of the body (2) or cannot be reflected. The air passing through the first heat exchanger (6) is prevented from reaching the rear wall of the body (6) when the guiding member (11) is in the closed position (K). The air passing through the first heat exchanger (6) is prevented from reaching the rear wall of the body (10) when the guiding member (11) is in the closed position (K). Thus, the air in the drying duct (4) is dehumidified and a cold region is formed on the rear wall of the body (2). By using the dehumidified air in the drying step, the drying performance is improved.

In accordance with the present invention, the dishwasher (1) comprises the guiding member (11) which can shift between the closed position (K) and the open position (A) by means of a motor (12) provided thereon. By means of the motor (12), the guiding member (11) is moved. Thus, the guiding member (11) in the closed position (K) can shift to the open position (A) and the guiding member (11) in the open position (A) can shift to the closed position (K).

In accordance with the present invention, the dishwasher (1) comprises a control unit (13) which controls the movement of the guiding member (11) between the open position (A) and the closed position (K). During the washing cycle, the air passing through the first heat exchanger (6) and cooling down is required to be used in the dishwasher (1) or discharged therefrom. Depending on the need, the control unit (13) controls the position of the guiding member (11). For example, in case the air passing through the first heat exchanger (6) is required to be discharged during the washing process, the control unit (13) shifts the guiding member (11) to the closed position (K), thus guiding the air to the lower side of the body (2) so as to be discharged. Thus, the air cannot reach the rear wall of the body (2) during the washing process. During the drying process performed after the washing process, the control unit (13) shifts the guiding member (10) to the open position (A), thus allowing the air to be delivered to the drying duct (4) via the air duct (10).

In accordance with the present invention, the dishwasher (1) comprises the control unit (13) which controls the position of the guiding member (11) according to the humidity rate in the drying duct (4), which is detected by means of a humidity sensor (14) disposed in the drying duct (4). The control unit (13) compares the humidity rate information determined by the humidity sensor (14) with the humidity rate information prerecorded on the control unit (13). If the detected humidity rate is higher than the prerecorded humidity rate, the control unit (13) shifts the guiding member (10) to the open position (A), thus allowing the air passing through the first heat exchanger (6) to be delivered to the drying duct (4) via the air duct (10). Thus, the humidity of the air in the drying duct (4) is decreased, improving the drying performance.

In another embodiment which does not form part of the present invention, the dishwasher (1) comprises the guiding member (11) which is produced by a thermoformable material. When the temperature of the air passing through the first heat exchanger (6) changes, the guiding member (11) changes shape can shift to the open position (A) or the closed position (K).

In another embodiment which does not form part of the present invention, the dishwasher (1) comprises at least one heat source (15) which is positioned after the first heat exchanger (6) in the air flow direction provided by the fan (9). When the temperature of the air passing through the first heat exchanger (6) changes, the thermoformable guiding member (11) changes shape can shift to the open position (A) or the closed position (K). Moreover, the cold air is prevented from being delivered to the rear wall of the body (2).

In another embodiment which does not form part of the present invention, the dishwasher (1) comprises a temperature sensor (16) which detects the temperature of the air passing through the first heat exchanger (6) and the control unit (13) which controls the operation of the heat source (15) by comparing the temperature value received from the temperature sensor (16) with the predetermined temperature value. In case the temperature detected by the temperature sensor (16) is lower than the temperature value prerecorded on the control unit (13), the control unit (13) operates the heat source (15) and thus prevents air passing through the first heat exchanger (6) with low temperature from being delivered to the rear wall of the body (2).

In another embodiment of the present invention, the dishwasher (1) comprises the control unit (13) which enables the fan (9) speed to be changed. By means of the control unit (13), the fan (9) speed is changed and thus the amount of air delivered onto and passing through the first heat exchange (6) also changes. As the fan (9) speed increases, the amount of air passing through the first heat exchanger (6) also increases and eliminates the force acting on the guiding member (11), thus enabling the change between the closed position (K) and the open position (A).

By means of the present invention, a dishwasher (1) is realized, comprising a guiding member (11) which prevents the air passing through the first heat exchanger (6) and cooling down from reaching the rear wall of the body (2) so as to be guided to the lower side of the body (2) during the washing process, and which allows the air passing through the first heat exchanger (6) to be delivered to the drying duct (4) via the air duct (10) during the drying process. Thus, the cold air is prevented from being delivered to the rear wall of the body (2) during the washing process, eliminating the risk of the efficiency of the heat pump (5) decreasing. During the drying process, by means of the air delivered to the drying duct (4), the humidity rate in the drying duct (4) decreases such that the drying performance is improved.

## Claims

1. A dishwasher (1) **comprising** a body (2), a washing tub (3) which is disposed in the body (2) and wherein the washing process is performed with the water taken from the mains line; a drying duct (4) which is provided on the body (2) and which provides the circulation of the humid air in the washing tub (3) by taking the same out of the washing tub (3) after the washing process, thus enabling the washed items to be dried; a heat pump (5) which is disposed under the washing tub (3), having a first heat exchanger (6) enabling the water to be used in the washing step to be heated by drawing heat from the environment, a second heat exchanger (7) transferring the heat received from the first heat exchanger (6) to the washing water and a compressor (8) fluidly connected to the first heat exchanger (6) and the second heat exchanger (7) so as to realize the refrigerant cycle; at least one fan (9) which enables the outer environment air to be delivered onto the first heat exchanger (6) ; an air duct (10) which is disposed between the washing tub (3) and the body (2) and which is connected to the drying duct (4); a guiding member (11 which has a fixed end and a free end movable around the fixed and which has an open position (A) and a closed position (K); and a control unit (13) which controls the movement of the guiding member (11) between an open position (A) and a closed position (K), **characterised in that**
- the fixed end is disposed on the first heat exchanger (6) ;
- in the closed position (K) the free end extends towards the rear wall of the body (2) and the air blown by the fan (9) and passing through the first heat exchanger (6) is prevented from reaching the rear wall of the body (2) so as to be guided to the lower side of the body (2), and
- in the open position (A) the free end extends towards the rear wall of the washing tub (I3) when the fixed end is on the first heat exchanger (6) such that the air passing through the first heat exchanger (6) is allowed to be delivered to the drying duct (4) via the air duct (10);
- the control unit (13) is configured to control the position of the guiding member (11) according to the humidity rate in the drying duct (4), which is detected by means of a humidity sensor (14) disposed in the drying duct (4).

2. A dishwasher (1) as in Claim 1, **characterized by** the guiding member (11) which can shift between the closed position (K) and the open position (A) by means of a motor (12) provided thereon.

3. A dishwasher (1) as in Claim 1, **characterized by** the control unit (13) which can change the fan (9) speed.

## Patentansprüche

1. Eine Geschirrspülmaschine (1) umfasst einen Körper (2), eine Waschwanne (3), die im Körper (2) angeordnet ist und wobei der Waschvorgang mit dem aus der Leitung entnommenen Wasser durchgeführt wird; einen am Körper (2) vorgesehenen Trocknungskanal (4), der für die Zirkulation der feuchten Luft in der Waschwanne (3) sorgt, indem er diese nach dem Waschvorgang aus der Waschwanne (3) abführt, wodurch das Geschirr getrocknet wird; eine Wärmepumpe (5), die unter der Waschwanne (3) angeordnet ist und einen ersten Wärmetauscher (6) aufweist, der eine Erwärmung des im Waschschritt zu verwendenden Wassers durch Entzug von Wärme aus der Umgebung ermöglicht, einen zweiten Wärmetauscher (7), der die vom ersten Wärmetauscher (6) empfangene Wärme auf das Waschwasser überträgt, und einen Kompressor (8), der mit dem ersten Wärmetauscher (6) und dem zweiten Wärmetauscher (7) in Fluidverbindung steht, um so den Kältemittelkreislauf zu realisieren; mindestens einen Ventilator (9), der es ermöglicht, die Außenumgebungsluft an den ersten Wärmetauscher (6) zu leiten; einen Luftkanal (10), der zwischen der Waschwanne (3) und dem Körper (2) angeordnet ist und der mit dem Trocknungskanal (4) verbunden ist; ein Führungselement (11), das ein festes Ende und ein um das feste Ende bewegliches freies Ende hat und das eine offene Position (A) und eine geschlossene Position (K) hat; und eine Steuereinheit (13), die die Bewegung des Führungselements (11) zwischen einer offenen Position (A) und einer geschlossenen Position (K) steuert,
**gekennzeichnet ist es dadurch, dass**
- das Ende fest ist,
- es am ersten Wärmetauscher (6) angeordnet ist;
- es in der geschlossenen Position (K) ist;
- sich das freie Ende in Richtung der Rückwand des Körpers (2) erstreckt und die vom Ventilator (9) geblasene und durch den ersten Wärmetauscher (6) strömende Luft daran gehindert wird, die Rückwand des Körpers (2) zu erreichen, so dass es zur Unterseite des Körpers (2) geführt wird und in der geöffneten Position (A)
- sich das freie Ende in Richtung der Rückwand der Waschwanne (3) erstreckt, wenn sich das feste Ende am ersten Wärmetauscher (6) befindet, so dass die durch den ersten Wärmetauscher (6) strömende Luft über den Luftkanal (10) zum Trocknungskanal (4) geleitet werden kann;
- die Steuereinheit (13) dazu konfiguriert ist, die Position des Führungselements (11) entsprechend der Feuchtigkeitsrate im Trocknungskanal (4) zu steuern, die mittels eines im Trocknungskanal (4) angeordneten Feuchtigkeitssensors (14) erfasst wird.

2. Eine Geschirrspülmaschine (1), wie in Anspruch 1 aufgeführt, **ist dadurch gekennzeichnet, dass** das Führungselement (11) mittels eines daran vorgesehenen Motors (12) zwischen der geschlossenen Position (K) und der offenen Position (A) verschiebbar ist.

3. Eine Geschirrspülmaschine (1), wie in Anspruch 1 aufgeführt, **ist dadurch gekennzeichnet, dass** die Steuereinheit (13) die Drehzahl des Ventilators (9) verändern kann.

## Revendications

1. Un lave-vaisselle (1) **comprenant** un corps (2), une cuve de lavage (3) disposée dans le corps (2) et dans laquelle le processus de lavage est effectué avec de l'eau prélevée sur le réseau ; un conduit de séchage (4) disposé sur le corps (2) et qui assure la circulation de l'air humide dans la cuve de lavage (3) en l'extrayant de la cuve de lavage (3) après le processus de lavage, permettant ainsi de sécher les articles lavés ; une pompe à chaleur (5) placée sous la baignoire (3), comportant un premier échangeur de chaleur (6) permettant de chauffer l'eau utilisée dans l'étape de lavage en puisant la chaleur dans l'environnement, un second échangeur de chaleur (7) transférant la chaleur reçue du premier échangeur de chaleur (6) à l'eau de lavage et un compresseur (8) relié fluidiquement au premier échangeur de chaleur (6) et au second échangeur de chaleur (7) de manière à réaliser le cycle frigorifique ; au moins un ventilateur (9) qui permet à l'air de l'environnement extérieur d'être acheminé vers le premier échangeur de chaleur (6); un conduit d'air (10) disposé entre la baignoire (3) et le corps (2) et relié au conduit de séchage (4) ; un élément de guidage (11)
qui a une extrémité fixe et une extrémité libre mobile autour de l'extrémité fixe et qui a une position ouverte (A) et une position fermée (K) ; et une unité de commande (13) qui commande le mouvement de l'élément de guidage (11) entre une position ouverte (A) et une position fermée (K), **caractérisée par le fait que**
- L'extrémité fixe est
- disposé sur le premier échangeur de chaleur (6) ;
- en position fermée (K)
- l'extrémité libre s'étend vers la paroi arrière du corps (2) et l'air soufflé par le ventilateur (9) et traversant le premier échangeur de chaleur (6) est empêché d'atteindre la paroi arrière du corps (2) de manière à être guidé vers le côté inférieur du corps (2), et dans la position ouverte (A)
- l'extrémité libre s'étend vers la paroi arrière de la baignoire (I3) lorsque l'extrémité fixe se trouve sur le premier échangeur de chaleur (6) de sorte que l'air traversant le premier échangeur de chaleur (6) puisse être acheminé vers le conduit de séchage (4) par l'intermédiaire du conduit d'air (10) ;
- l'unité de commande (13) est configurée pour commander la position de l'élément de guidage (11) en fonction du taux d'humidité dans le conduit de séchage (4), qui est détecté au moyen d'un capteur d'humidité (14) placé dans le conduit de séchage (4).

2. Un lave-vaisselle (1) selon la déclaration 1, **caractérisé par** l'élément de guidage (11) qui peut passer de la position fermée (K) à la position ouverte (A) au moyen d'un moteur (12) prévu à cet effet.

3. Un lave-vaisselle (1) selon la déclaration 1, **caractérisé par** l'unité de commande (13) qui peut modifier la vitesse du ventilateur (9).
